# EUROPEAN PATENT SPECIFICATION

(11) **EP 3 750 005 B1**
(45) Date of publication and mention of the grant of the patent: **27.12.2023**
(21) Application number: 18717878.5
(22) Date of filing: 05.04.2018
(51) Int. Cl.: G02B 27/64, G03B 17/17, G02B 13/00

(54) **LENS ARRANGEMENT**
LINSENANORDNUNG
AGENCEMENT DE LENTILLE

(43) Date of publication of application: 16.12.2020
(73) Proprietor: HUAWEI TECHNOLOGIES CO., LTD., Shenzhen, Guangdong 518129 (CN)
(72) Inventor: EROMAKI, Marko, 16440 Kista (SE)
(74) Representative: Gill Jennings & Every LLP
(86) International application number: PCT/EP2018/058718
(87) International publication number: WO 2019/192704

(56) References cited:
- WO-A1-2017/037688
- CN-A- 106 990 551
- KR-A- 20140 014 787

## Description

### TECHNICAL FIELD

The disclosure relates to a lens arrangement, and more particularly, to a lens arrangement with autofocus (AF) and optical image stabilization (OIS) functions.

### BACKGROUND

Currently, Voice Coil Motor (VCM) based actuation systems are used for performing AF and OIS functions of horizontally driven tele-angle-cameras. Such cameras are e.g. used in smartphones and the horizontal orientation relates to the main extent/display screen of the smart phone or to the printed circuit board in the smart phone on which the camera is mounted, i.e. the optical path in the lens arrangement is substantially parallel with this main extent. This type of camera has challenges in implementing AF and OIS since the height (measured perpendicularly to the main extent) of the camera unit limits the design. The size of VCM based AF actuation systems is relatively large due to poor force generation capacity for long AF stroke length. The form factor of the lens arrangement then becomes critical in horizontal tele-cameras, which have height limitation and need to fit large lenses to achieve a low F-number. Actuator structure around the horizontally moving optics reduces effective lens diameters resulting in a need to keep sensor size and resolution low. Tele-cameras need longer stroke (e.g. 400 um) due to longer focal length which is difficult to achieve with the limited VCM stroke range. Further, the K-factor of suspension springs needs to be low, resulting in low resonance, higher posture, higher dynamic tilt and longer settling time. The document CN106 990 551 A discloses a lens arrangement according to the prior art. It discloses a camera with a mirror assembly and a lens assembly. The mirror is moveable along a first axis using a shape memory alloy wire. A second shape memory alloy wire is used to move the lens assembly to perform autofocus.

### SUMMARY

It is an object to provide a lens unit that overcomes or at least reduces the problem set out above.

The foregoing and other objects are achieved by the features of the independent claims. Further implementation forms are apparent from the dependent claims, the description and the figures.

According to a first aspect, there is provided a lens arrangement comprising
a reflective element configured to fold the path of light from a first optical path to a second optical path that is at an angle with the first optical path,
a movable lens unit comprising one or more optical lenses arranged along a first optical axis along the second optical path,
wherein the reflective element is configured to be linearly displaceable parallel to the second optical path.

In a possible implementation form of the first aspect the first optical path it is at a right angle with the second optical path.

According to the first aspect the lens arrangement further comprises a first actuator configured to move the lens unit in first directions along the first optical path, and in second directions orthogonal to the first direction and orthogonal to the plane containing the first and second optical paths.

According to the first aspect the lens arrangement comprises a second actuator configured to displace the reflective element parallel to the first optical path.

According to the first aspect the reflective element comprises at least two sides, and wherein both the first actuator in the second actuator are arranged on a same side of the reflective element.

In a possible implementation form of the first aspect at least the first actuator or the second actuator comprises a shape-memory alloy member.

Using an SMA member, as the first and second actuators allows to decrease the power needed to generate high force, increase stability. The so obtained structure is non-resonating, simple and cost-efficient. Further, this type of actuators have a self-sensing capability, so that the driver can detect wire contraction state as the length causes change in wire diameter (resistance changes) for the supplier current; and insensitivity to adjacent actuators (VCM systems cannot placed close to each other as the magnets typically interfere).

In a possible implementation form of the first aspect both the first actuator and the second actuator comprise a shape-memory alloy member.

In a possible implementation form of the first aspect the reflective element includes a prism.

In a possible implementation form of the first aspect the prism has one reflective surface.

In a possible implementation form of the first aspect the reflective element includes a mirror.

According to a second aspect, there is provided a camera unit comprising
a lens arrangement according to the first aspect or any implementation forms thereof, and
an image sensor unit arranged in a plane orthogonal to the first optical path, on the side of the lens unit opposite to the reflective element, wherein
the lens unit is movable in the first direction for image focusing, and
the lens unit is movable in the second direction for yaw axis optical image stabilization, and
the reflective element is displaceable parallel to the second optical path for pitch axis optical image stabilization.

In a possible implementation form of the second aspect the displacement of the reflective element results in an adjustment of the location of the light projection on an image sensor in the image sensor unit.

According to the second aspect the camera comprises
a second actuator configured to displace the reflective element parallel to the first optical path, wherein
the movable lens unit, the first actuator and the second actuator are all arranged in a housing between the image sensor unit and the reflective element.

In a possible implementation form of the second aspect at least the first actuator or the second actuator is embedded in the wall of the housing or forms part of a wall of the housing.

In a possible implementation form of the second aspect both the first actuator and the second actuator are embedded in the wall of the housing or form part of a wall of the housing.

In a possible implementation form of the second aspect the reflective element comprises a triangular prism including a (single) reflective surface, a first transparent surface and a second transparent surface.

In a possible implementation form of the second aspect the virtual space defined by mirroring the prism to its own reflective surface is unoccupied by the camera unit.

According to a third aspect, there is provided a camera module comprising
at least one first camera unit according to the second aspect or any possible implementation forms thereof, and
at least one second camera unit comprising:
   a movable lens unit comprising one or more optical lenses arranged along a second optical axis parallel to the first optical path, and
   an image sensor arranged in a plane orthogonal to the second optical axis.

The combined first camera unit and second camera unit provide for a narrow form factor due to a relatively short width W. When used in a smart phone, the printed substrate 6 will typically be arranged parallel with the display screen of the smart phone.

In a possible implementation form of the third aspect the lens arrangement of the first camera unit(s) is a lens arrangement according a possible implementation form of the second aspect, and
the at least one second camera unit further comprise(s) one or more coil-magnet actuators for moving the lens unit of the second camera unit.

In a possible implementation form of the third aspect at least one of the first camera units is a camera unit according to the second aspect or any implementation thereof, and at least a part of the at least one of the second camera units is arranged in the virtual space.

According to a fourth aspect, there is provided a use of an actuator comprising a shape-memory alloy member in a lens arrangement comprising:
a reflective element configured to fold the path of light orthogonally from a first optical path to a second optical path,
a movable lens unit comprising one or more optical lenses arranged along a first optical axis along the second optical path,
wherein the actuator is used for linearly displacing the reflective element parallel to the second optical path.

These and other aspects will be apparent from and the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 is a diagrammatic side view of an embodiment of a lens arrangement,
Fig. 2 is a diagrammatic side view of another embodiment of a lens arrangement,
Fig. 3 is a diagrammatic side view of the lens arrangement of in Fig. 2 in combination with another type of lens arrangement and with a slight distance therebetween,
Fig. 4 is a diagrammatic side view of the lens arrangement of in Fig. 2 in combination with another type of lens arrangement, with essentially no distance therebetween,
Fig. 5 is an elevated view of the lens arrangement shown in Fig. 4
Fig. 6 is an elevated and partially exploded view of the lens arrangement of Fig. 2,
Fig. 7 is a sectional view of the lens arrangement of Fig. 2, and
Fig. 8 is an elevated view of an actuator used in the lens arrangement of Fig. 3.

### DETAILED DESCRIPTION

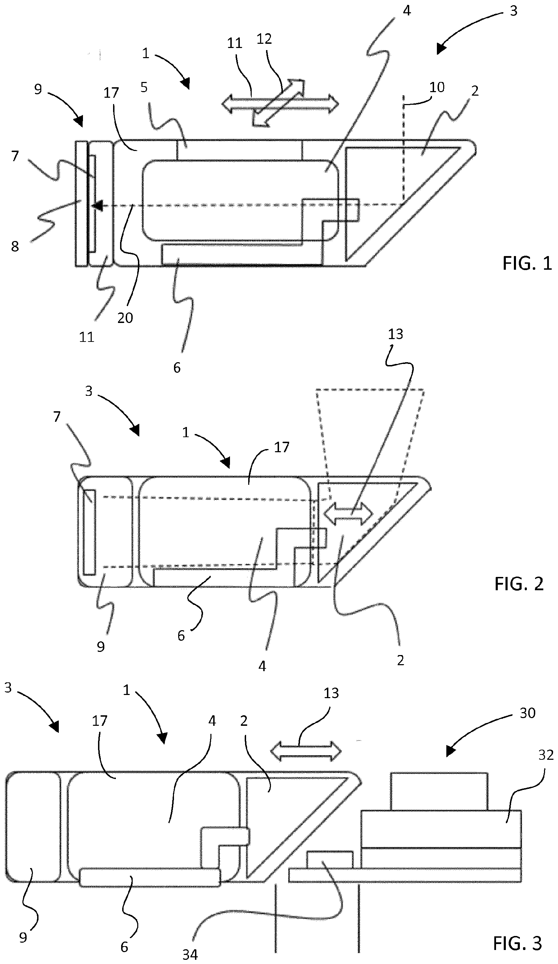

Figs. 1 and 2 show a lens arrangement 1 that folds the path of the incoming light from a first optical path 10 to a second optical path 20. The first optical path 10 is at an angle with the second optical path 20. The angle between the first optical path 10 and the second optical path 20 is in an embodiment a right angle, so that the first optical path 10 and the second optical path 20 are orthogonal.

The lens arrangement 1 comprises a lens unit 4. The lens unit 4 has a housing 17 that comprises one or more optical lenses arranged along a first optical axis that is parallel with the second optical path 20.

The lens unit 4, i.e. the lenses of the lens unit 4 can be moved by a first actuator 5 in first directions 11 and in second directions 12. The first directions 11 are parallel with the first optical axis and the second directions 12 are in a plane that is orthogonal to the first optical axis preferably the second directions 12 are orthogonal to the plane containing the first path 10 and second optical path 20.

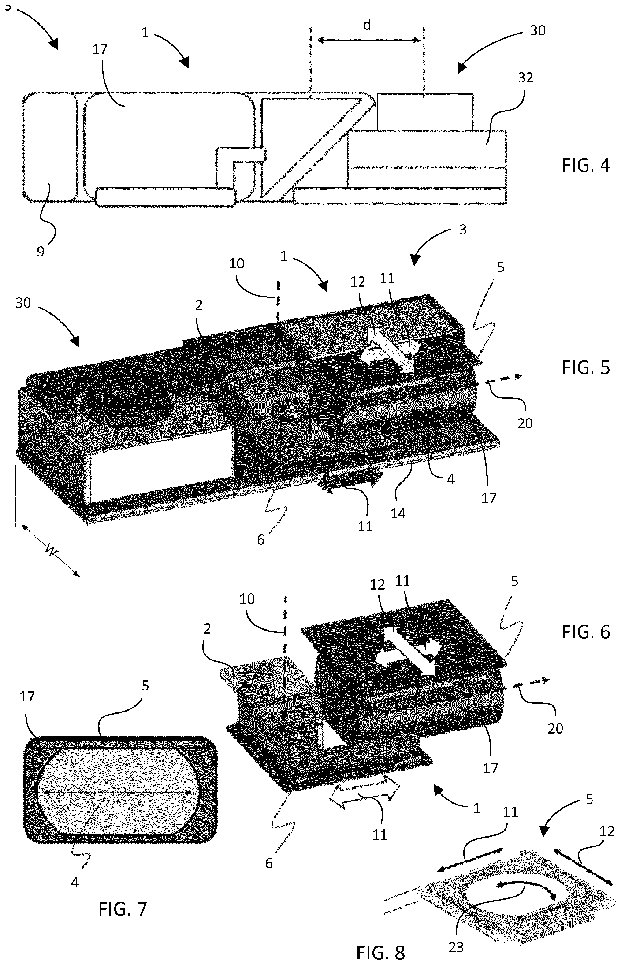

In an embodiment the first actuator 5 comprises one or more shape-memory alloy (SMA) members (e.g. SMA wires) for providing the required movement for the lens unit 4. In an embodiment the first actuator is also capable of providing rotational movement 23, as shown in Fig. 8.

The lens arrangement 1 further comprises a reflective element 2 that folds the path of the incoming light from the first optical path 10 to the second optical path 20. In an embodiment the reflective element 2 comprises a prism that has one reflective surface. The reflective element 2 is configured to be linearly displaceable parallel to the first optical path 10 by a second actuator 6. In an embodiment the second actuator 6 comprises one or more shape-memory alloy (SMA) members (e.g. SMA wires) for providing the required displacement for the reflective element 2.

The first actuator 5 and the second actuator 6 can be constructed very thin, when using an SMA member and therefore the first actuator 5 and the second actuator 6 can be embedded in the housing 17 of the lens unit 4. The first actuator 5 and the second actuator 6, when using an SMA member, generate high force generation with reasonable power, high stability and non-resonating structure, simple and cost-efficient structure, self-sensing capability (the driver can detect wire contraction state as the length causes change in wire diameter (resistance changes) for the supplier current), insensitivity to adjacent actuators (VCM systems cannot placed close to each other as the magnets typically interfere).

The reflective element 2 is arranged at one end of the lens unit 4 and a sensor unit 9 is arranged at the opposite and of the lens unit 4. The sensor unit 9 comprises an image sensor 7 on a substrate 8, and a sensor cover 11. The image sensor 7 is arranged orthogonally to the first optical axis. The lens arrangement 1, together with the sensor unit 9 forms a camera unit 3.

As also shown in Fig. 7, the first actuator 5 is in an embodiment in the housing 17 of the lens unit 4, or the first actuator 5 forms a part of the housing 17 of the lens unit 4. The second actuator 6, can in embodiment be in the housing of the lens unit 4 or form a part of the housing 17.

The lens unit 4 is movable in the first directions 11 for image focusing and the lens unit 4 is movable in the second directions 12 for yaw axis optical image stabilization.

The reflective element 2 is displaceable in directions 13 parallel to the first optical axis for pitch axis optical image stabilization.

The movable lens unit 4, the first actuator 5 and the second actuator are 6 in an embodiment all arranged in a housing 17 that is disposed between the image sensor unit 9 and the reflective element 2.

The displacement 13 along the first optical axis of the reflective element 2 results in an adjustment of the location of the light projection and the image sensor 7.

Structurally, the form factor of the camera unit 3 the following achieves benefits (nonexhaustive list). Since there is no actuator behind the effective element 2, the free space can be used to accommodate hardware elements, partially place a second camera unit for reducing the overall length of the combined primary and secondary camera units.

As shown in Fig. 3, the lens unit 1 is in an embodiment used in a (first) camera unit 3 in combination with a second camera unit 30. The second camera unit 30 is in this embodiment a vertically driven camera unit 30 comprising an actuator unit 32 that is placed adjacent to the reflective element 2 as an extension of the longitudinal axis of the first camera unit 3. Since there is no actuator behind the reflective element 2, the free space can be used to accommodate hardware elements 34 (such as e.g. iOS driver, gyro).

In another embodiment, as shown in Fig. 4 the free space adjacent the reflective element 2 is used to at least partially accommodate the second camera unit 30, thereby reducing the overall length of the combined first camera unit 3 and second camera unit 30. There is no mutual interference between the first camera unit 3 in the second camera unit 30 due to non-interfering actuator technologies and long mutual distance, thus allowing the close location of the cameras.

Fig. 5 is an elevated view of the combined first camera unit 3 and second camera unit 30 of Fig. 4 on a substrate 6 (such as e.g. a printed circuit board). The combined first camera unit 3 and second camera unit 30 provide for a narrow form factor due to a relatively short width W. When used in a smart phone, the printed substrate 6 will typically be arranged parallel with the display screen of the smart phone.

Fig. 6 is an exploded elevated view of the lens arrangement of Fig. 3 and Fig. 8 is an elevated view of the first actuator 5, illustrating the lens barrel movement 11 in the Y-direction for focusing function, the lens barrel movement 12 in the X-direction for yaw axis and OIS correction and the optional rotational movement 13 about the Z-axis. The movements of the first actuator 5 are used to perform AF and OIS movements for tele-side-camera and opto-mechanics correction functions. The mechanical suspension system remains a rigid since no specific guiding elements are used, instead only the actuation platforms are used, allowing self-correction of movement errors. The OIS platform integration height can be kept extremely low and the first actuator 5 can be embedded within housing wall thickness.

The second actuator 6 moves the reflective element 2 in Y-direction 13 for pitch-axis OIS correction. The construction allows for the use of a large prism for the reflective element 2. A large prism results in low F-number, thus avoiding the need for an additional collimating lens.

Fig. 7 is a sectional view of the lens unit 4, showing the larger width available for the lenses in the lens unit 4, as illustrated by the double arrow line, caused by the first actuator 5 being extremely slim and being arranged in a wall of the housing 17 of the lens unit 4. Thus, wide lenses are feasible and no separate guiding elements are needed for the actuator/lens arrangement.

The reference signs used in the claims shall not be construed as limiting the scope.

## Claims

1. A lens arrangement (1) comprising
a reflective element (2) configured to fold the path of light from a first optical path (10) to a second optical path (20) that is at an angle with said first optical path (10),
a movable lens unit (4) comprising one or more optical lenses arranged along a first optical axis along said second optical path (20),
wherein said reflective element (2) is configured to be linearly displaceable parallel to said second optical path (20),
a first actuator (5) configured to move the lens unit (4) in first directions along said second optical path (20), and in second directions orthogonal to the plane containing the first optical path (10) and the second optical path (20), and
a second actuator (6) configured to displace the reflective element (2) parallel to said second optical path (20),
wherein said reflective element (2) comprises at least two sides, and wherein both the first actuator (5) and the second actuator (6) are arranged on a same side of said reflective element (2).

2. A lens arrangement (1) according to claim 1, wherein at least said first actuator (5) or said second actuator (6) comprises a shape-memory alloy member.

3. A lens arrangement (one) according to claim 1, wherein both said first actuator (5) and said second actuator (6) comprise a shape-memory alloy member.

4. A lens arrangement (1) according to any of claims 1 to 3, wherein the reflective element (2) includes a prism.

5. A lens arrangement (1) according to any of claims 1 to 3, wherein the reflective element (2) includes a mirror.

6. A camera unit comprising
a lens arrangement (1) according to any of claims 1 to 5, comprising at least two sides, and an image sensor unit (7) arranged in a plane orthogonal to the second optical path (20), on the side of the lens unit (4) opposite to the reflective element (2), wherein
the lens unit (4) is movable in said first direction for image focusing,
the lens unit is (4) movable in said second direction for yaw axis optical image stabilization,
the reflective element (2) is displaceable parallel to said second optical path (20) for pitch axis optical image stabilization, and
the movable lens unit (4), the first actuator (5) and the second actuator (6) are all arranged in a housing (17) between said image sensor unit (7) and said reflective element (2).

7. A camera unit according to claim 6, wherein at least said first actuator (5) or said second actuator (6) is embedded in a wall of said housing or form a part of a wall of said housing (17).

8. A camera unit according to claim 6, wherein both said first actuator (5) and said second actuator (6) are embedded in a wall of said housing (17) or form part of a wall of said housing (17).

9. A camera unit according to any of claims 6 to 8, wherein the reflective element (2) comprises a triangular prism including a reflective surface, a first transparent surface and a second transparent surface, and
wherein the virtual space defined by mirroring said prism to its own reflective surface is unoccupied by the camera unit.

10. A camera module comprising
at least one first camera unit according to any of claims 6 to 9, and
at least one second camera unit (30) comprising
a movable lens unit comprising one or more optical lenses arranged along a second optical axis parallel to said first optical path (10), and
an image sensor arranged in a plane orthogonal to said second optical axis.

11. A camera module according to claim 10, wherein
the lens arrangement (4) of the first camera unit(s) is a lens arrangement according to claim 3, and
the at least one second camera unit (30) further comprise(s) one or more coil-magnet actuators (32) for moving the lens unit of said second camera unit (30).

12. A camera module according to any of claims 10 or 11, wherein at least one of the first camera units is a camera unit according to claim 9, and at least a part of the at least one of the second camera units (30) is arranged in said virtual space.

13. The use of a second actuator (6) comprising a shape-memory alloy member in a lens arrangement (1) according to claim 1.

## Patentansprüche

1. Linsenanordnung (1), umfassend
ein reflektierendes Element (2), das ausgestaltet ist, um den Weg des Lichts von einem ersten optischen Weg (10) zu einem zweiten optischen Weg (20) zu falten, der in einem Winkel zu dem ersten optischen Weg (10) ist,
eine bewegbare Linseneinheit (4), die ein oder mehrere optische Linsen umfasst, die entlang einer ersten optischen Achse entlang des zweiten optischen Wegs (20) angeordnet ist bzw. sind,
wobei das reflektierende Element (2) ausgestaltet ist, um parallel zu dem zweiten optischen Weg (20) linear verschiebbar zu sein,
einen ersten Aktuator (5), der ausgestaltet ist, um die Linseneinheit (4) in ersten Richtungen entlang des zweiten optischen Wegs (20) und in zweiten Richtungen orthogonal zu der Ebene, die den ersten optischen Weg (10) und den zweiten optischen Weg (20) enthält, zu bewegen, und
einen zweiten Aktuator (6), der ausgestaltet ist, um das reflektierende Element (2) parallel zu dem zweiten optischen Weg (20) zu verschieben,
wobei das reflektierende Element (2) mindestens zwei Seiten umfasst, und wobei sowohl der erste Aktuator (5) als auch der zweite Aktuator (6) auf derselben Seite des reflektierenden Elements (2) angeordnet sind.

2. Linsenanordnung (1) nach Anspruch 1, wobei mindestens der erste Aktuator (5) oder der zweite Aktuator (6) ein Formgedächtnislegierungsglied umfasst.

3. Linsenanordnung (1) nach Anspruch 1, wobei sowohl der erste Aktuator (5) als auch der zweite Aktuator (6) ein Formgedächtnislegierungsglied umfassen.

4. Linsenanordnung (1) nach einem der Ansprüche 1 bis 3, wobei das reflektierende Element (2) ein Prisma einschließt.

5. Linsenanordnung (1) nach einem der Ansprüche 1 bis 3, wobei das reflektierende Element (2) einen Spiegel einschließt.

6. Kameraeinheit, umfassend
eine Linsenanordnung (1) nach einem der Ansprüche 1 bis 5, umfassend mindestens zwei Seiten, und
eine Bildsensoreinheit (7), die in einer Ebene orthogonal zu dem zweiten optischen Weg (20) auf der Seite der Linseneinheit (4) gegenüber von dem reflektierenden Element (2) angeordnet ist, wobei
die Linseneinheit (4) zur Bildfokussierung in der ersten Richtung bewegbar ist,
die Linseneinheit (4) in der zweiten Richtung zur optischen Bildstabilisierung um die Gierachse beweglich ist,
das reflektierende Element (2) zur optischen Bildstabilisierung um die Nickachse parallel zu dem zweiten optischen Weg (20) verschiebbar ist, und
die bewegliche Linseneinheit (4), der erste Aktuator (5) und der zweite Aktuator (6) alle in einem Gehäuse (17) zwischen der Bildsensoreinheit (7) und dem reflektierenden Element (2) angeordnet sind.

7. Kameraeinheit nach Anspruch 6, wobei mindestens der erste Aktuator (5) oder der zweite Aktuator (6) in eine Wand des Gehäuses eingebettet ist oder ein Teil einer Wand des Gehäuses (17) bildet.

8. Kameraeinheit nach Anspruch 6, wobei sowohl der erste Aktuator (5) als auch der zweite Aktuator (6) in eine Wand des Gehäuses (17) eingebettet sind oder ein Teil einer Wand des Gehäuses (17) bilden.

9. Kameraeinheit nach einem der Ansprüche 6 bis 8, wobei das reflektierende Element (2) ein dreieckiges Prisma umfasst, das eine reflektierende Oberfläche, eine erste transparente Oberfläche und eine zweite transparente Oberfläche einschließt, und
wobei der virtuelle Raum, der durch Spiegeln des Prismas auf seine eigene reflektierende Oberfläche definiert ist, nicht durch die Kameraeinheit belegt wird.

10. Kameramodul, umfassend
mindestens eine erste Kameraeinheit nach einem der Ansprüche 6 bis 9 und mindestens eine zweite Kameraeinheit (30), umfassend
eine bewegliche Linseneinheit, umfassend eine oder mehrere optische Linsen, die entlang einer zweiten optischen Achse parallel zu dem ersten optischen Weg (10) angeordnet sind, und
einen Bildsensor, der in einer Ebene orthogonal zu der zweiten optischen Achse angeordnet ist.

11. Kameramodul nach Anspruch 10, wobei
die Linsenanordnung (4) der ersten Kameraeinheit(en) eine Linsenanordnung gemäß Anspruch 3 ist, und
die mindestens eine zweite Kameraeinheit (30) ferner ein oder mehrere Magnetspulenaktuatoren (32) zum Bewegen der Linseneinheit der zweiten Kameraeinheit (30) umfasst.

12. Kameramodul nach einem der Ansprüche 10 oder 11, wobei mindestens eine von den ersten Kameraeinheiten eine Kameraeinheit gemäß Anspruch 9 ist, und mindestens ein Teil der mindestens einen der zweiten Kameraeinheiten (30) in dem virtuellen Raum angeordnet ist.

13. Verwendung eines zweiten Aktuators (6), umfassend ein Formgedächtnislegierungsglied in einer Linsenanordnung (1) gemäß Anspruch 1.

## Revendications

1. Agencement de lentille (1) comprenant :
un élément réfléchissant (2) configuré pour dévier le chemin de la lumière d'un premier chemin optique (10) vers un second chemin optique (20) qui fait un angle avec ledit premier chemin optique (10),
une unité mobile de lentille (4) comprenant une ou plusieurs lentilles optiques agencées le long d'un premier axe optique le long dudit second chemin optique (20),
ledit élément réfléchissant (2) étant configuré pour être déplacé linéairement parallèlement audit second chemin optique (20),
un premier actionneur (5) configuré pour déplacer l'unité de lentille (4) dans des premières directions le long dudit second chemin optique (20), et dans des secondes directions orthogonales au plan contenant le premier chemin optique (10) et le second chemin optique (20), et
un second actionneur (6) configuré pour déplacer l'élément réfléchissant (2) parallèlement audit second chemin optique (20),
ledit élément réfléchissant (2) comprenant au moins deux côtés, et le premier actionneur (5) et le second actionneur (6) étant agencés sur un même côté dudit élément réfléchissant (2).

2. Agencement de lentille (1) selon la revendication 1, au moins ledit premier actionneur (5) ou ledit second actionneur (6) comprenant un élément en alliage à mémoire de forme.

3. Agencement de lentille (une) selon la revendication 1, ledit premier actionneur (5) et ledit second actionneur (6) comprenant tous deux un élément en alliage à mémoire de forme.

4. Agencement de lentilles (1) selon l'une quelconque des revendications 1 à 3, l'élément réfléchissant (2) comprenant un prisme.

5. Agencement de lentille (1) selon l'une quelconque des revendications 1 à 3, l'élément réfléchissant (2) comprenant un miroir.

6. Unité de caméra comprenant :
un agencement de lentille (1) selon l'une quelconque des revendications 1 à 5, comprenant au moins deux côtés, et une unité de capteur d'image (7) agencée dans un plan orthogonal au second chemin optique (20), sur le côté de l'unité de lentille (4) opposé à l'élément réfléchissant (2),
l'unité de lentille (4) étant mobile dans ladite première direction pour la mise au point de l'image,
l'unité de lentille (4) étant mobile dans ladite seconde direction pour la stabilisation optique de l'image selon l'axe de lacet,
l'élément réfléchissant (2) pouvant être déplacé parallèlement au second chemin optique (20) pour la stabilisation optique de l'image selon l'axe de tangage, et
l'unité de lentille mobile (4), le premier actionneur (5) et le second actionneur (6) étant tous agencés dans un boîtier (17) entre ladite unité de capteur d'image (7) et ledit élément réfléchissant (2).

7. Unité de caméra selon la revendication 6, au moins ledit premier actionneur (5) ou ledit second actionneur (6) étant intégré dans une paroi dudit boîtier ou faisant partie d'une paroi dudit boîtier (17).

8. Unité de caméra selon la revendication 6, ledit premier actionneur (5) et ledit second actionneur (6) étant tous deux intégrés dans une paroi dudit boîtier (17) ou faisant partie d'une paroi dudit boîtier (17).

9. Unité de caméra selon l'une quelconque des revendications 6 à 8, l'élément réfléchissant (2) comprenant un prisme triangulaire comprenant une surface réfléchissante, une première surface transparente et une seconde surface transparente,
et
l'espace virtuel défini par la réflexion dudit prisme sur sa propre surface réfléchissante étant inoccupé par l'unité de caméra.

10. Module de caméra comprenant :
au moins une première unité de caméra selon l'une quelconque des revendications 6 à 9, et
au moins une seconde unité de caméra (30) comprenant :
une unité mobile de lentille comprenant une ou plusieurs lentilles optiques agencées le long d'un second axe optique parallèle au premier chemin optique (10), et
un capteur d'image agencé dans un plan orthogonal audit second axe optique.

11. Module de caméra selon la revendication 10,
l'agencement de lentille (4) de la ou des premières unités de caméra étant un agencement de lentille selon la revendication 3, et
l'au moins une seconde unité de caméra (30) comprenant en outre un ou plusieurs actionneurs à bobine magnétique (32) pour déplacer l'unité de lentille de ladite seconde unité de caméra (30).

12. Module de caméra selon l'une quelconque des revendications 10 et 11, au moins une des premières unités de caméra étant une unité de caméra selon la revendication 9, et au moins une partie de l'au moins une des secondes unités de caméra (30) étant agencée dans ledit espace virtuel.

13. Utilisation d'un second actionneur (6) comprenant un élément en alliage à mémoire de forme dans un agencement de lentille (1) selon la revendication 1.
